Europäisches Patentamt

**European Patent Office**

**Office européen des brevets**

(11) Publication number: **0 048 783**
A1

## EUROPEAN PATENT APPLICATION

(21) Application number: **80830102.2**

(51) Int. Cl.³: **F 24 J 3/02**

(22) Date of filing: **01.12.80**

(30) Priority: **26.09.80 IT 4975280**

(71) Applicant: **Rapisarda, Vittorio, Via Trento e Trieste, 21, Soverato (Catanzaro) (IT)**

(43) Date of publication of application: **07.04.82**
**Bulletin 82/14**

(72) Inventor: **Rapisarda, Vittorio, Via Trento e Trieste, 21, Soverato (Catanzaro) (IT)**

(84) Designated Contracting States: **AT BE CH DE FR GB LI NL SE**

(74) Representative: **Mascioli, Alessandro, Prof.Dr., c/o A.N.D.I. Associazione Nazionale degli Inventori Via Lima, 35, I-00198 Roma (IT)**

(54) **A two-sided solar panel.**

(57) This invention covers a two-sided solar panel with radiation-capturing surfaces on both faces (1, 2) rather than just one, that is on the anterior and posterior faces with respect to the direction of the rays. One or more coupled mirrors (3) on each panel, whether their shape is falt, spherical or other, are positioned outside the shadow cast by the panel itself, at such an inclination that rays incident upon them are reflected onto the posterior face (2) of the panel. In this way, the irradiation is the same on the anterior and posterior faces.

0048783

## A two-sided solar panel

This invention involves a solar panel capable of absorbing radiant energy both on the face directly exposed to the sun and on the opposite usually shaded one, with a resulting increase in total energetic yield.

Currently, solar panels of various types and properties are known. However, all of these have as their major aim the capture and transformation of the radiant energy incident on their anterior surfaces, with consequent heating of water or other liquids.

The aim of this invention is to double and further improve the yield of current solar panels, of practically equal dimensions, in order to obtain in a known type of hydraulic installation, either a much larger quantity of hot water or water at higher temperatures than those possible with known panels of equal surface exposed to the sun.

This aim is achieved in a solar panel with radiation-capturing surfaces not on one face only, but rather on both the anterior and posterior faces, with respect to the direction of the rays. One or more coupled mirrors on each panel, whether their shape is flat, spherical or other, are positioned outside the shadow cast by the panel itself at such an inclination that rays incident upon them are reflected onto the posterior face of the panel.

0048783

In this way, the irradiation is the same on both anterior and posterior faces.

These mirrors are operated by a timer, or similar device, of known type to follow the course of the sun during the day in such a way that by varying their inclination, they always reflect the solar rays onto the posterior face of the panel.

The invention is illustrated in detail in the attached drawings, where two preferred but non-limiting variants are schematized.

Figure 1 shows a two-sided panel and flat coupled mirrors, complete with hydraulic installation.

Figure 2 shows a concave mirror variant.

In particular, the solar panel is shown with anterior face 1 and posterior face 2. The direct rays and those reflected by flat mirror 3 or concave mirror 4 fall on faces 1 and 2 respectively to heat the water they contain. This then passes through tubes 5 to reach heat exchanger 6, with accumulation of thermal energy, through the action of pump 7 and under the control of differential thermostat 8, of a known type. A timer operates mechanism 9 for orienting mirrors 3 or 4.

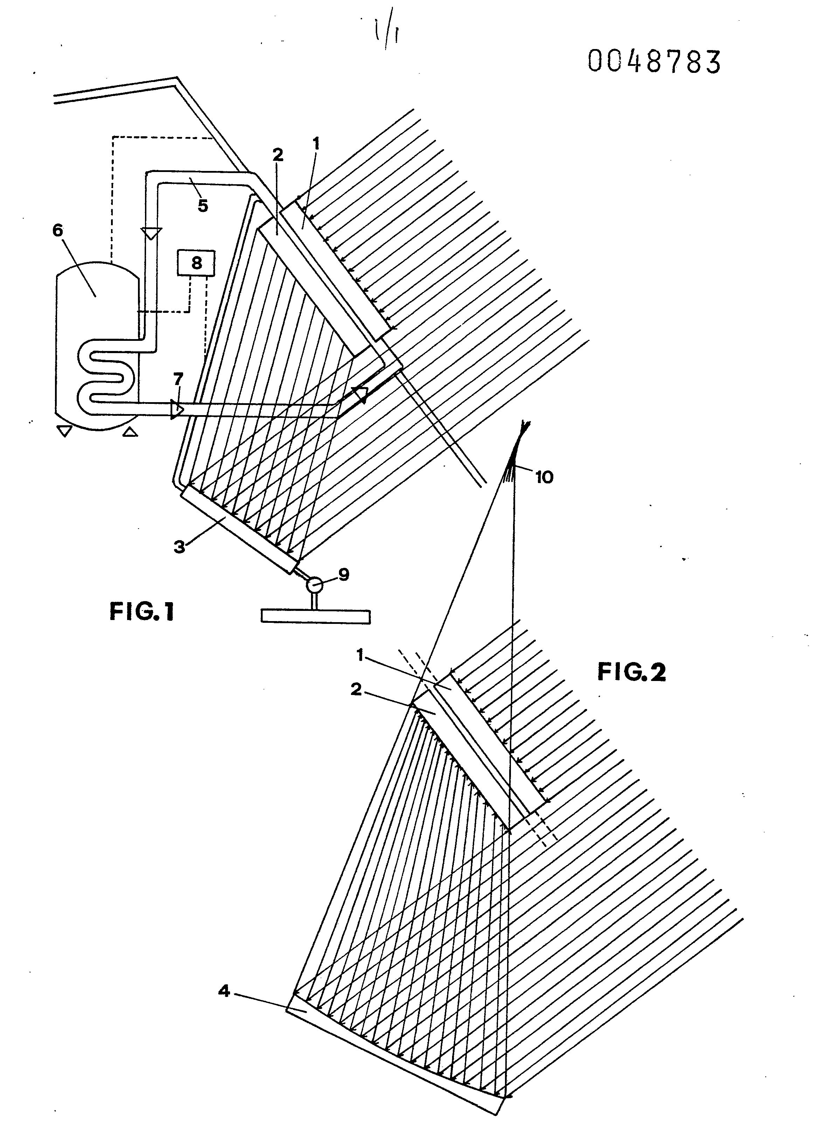

In figure 2, theoretical focal point 10 is shown. This would be formed above face 2 of the panel by rays collected on a wider surface area of concave mirror 4. However, in actuality this does not occur because said rays are blocked and absorbed by said posterior face 2 of the panel and then transformed into thermal energy.

Of course, while the principle of the finding remains the same, the types of realization and particulars of construction may be varied widely from that described and illustrated here, without going beyond this invention.

Claims:

1. Two-sided solar panel with radiation-capturing surfaces not on one face only but rather on both the anterior and posterior faces, with respect to the direction of the rays; one or more coupled mirrors on each panel, whether flat, spherical or other, are positioned outside the shadow cast by the panel itself, at such an inclination that rays incident upon them are reflected onto the posterior face of the panel so that the irradiation is the same on both anterior and posterior faces.

2. Solar panel according to claim 1, characterized in that said mirrors are operated by a timer or similar device of a known type to follow the course of the sun during the day in such a way that by varying their inclination they always reflect the solar rays onto the posterior face of the panel.

3. Solar panel according to claims 1 and 2, characterized by anterior and posterior faces 1 and 2 on which fall respectively the direct rays and those reflected by flat or concave mirror 3 or 4 so as to heat the water they contain; this heated water then passes through tubes 5 to reach heat exchanger 6 with accumulation of thermal energy, through the action of pump 7 and controlled by differential thermostat 8, of a known type; a timer operates mechanism 9 for orienting mirrors 3 or 4.

0048783

4. Solar panel according to claims 1 and 2, characterized by theoretical focal point 10 which would be formed
above face 2 of the panel by rays collected on a wider
surface area of concave mirror 4; however, in actuality
this does not occur because said rays are blocked and
absorbed by said posterior face 2 of the panel and then
transformed into thermal energy.

The entire invention is substantially as described and
illustrated and has the specified aims.

0048783

FIG.1

FIG.2

European Patent Office

**EUROPEAN SEARCH REPORT**

0048783

Application number

EP 80830102.2

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | FR - A - 1 601 101 (ESCONDEUR) <br> * Page 3, lines 42-44; fig. 27 * <br> -- | 1 | F 24 J 3/02 |
| | FR - A - 2 295 373 (CATEL MANUFACTURING INC.) <br> * Page 5; fig. 5 * <br> & US-A-3 984 881 <br> -- | 1 | |
| A | AT - B - 352 354 (STACHETSBERGER) <br> * Totality * <br> -- | 1,4 | TECHNICAL FIELDS SEARCHED (Int. Cl.³) |
| A | DE - A - 1 476 717 (SCHÖN) <br> * Page 5, lines 15,16 * <br> -- | 2 | F 24 J |
| A | AT - B - 354 018 (VEREINIGTE METALLWERKE) <br> * Totality * <br> ---- | 3 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search <br> VIENNA | Date of completion of the search <br> 02-12-1981 | Examiner <br> SCHMIDT | |

EPO Form 1503.1 06.78